(19) Europäisches Patentamt
European Patent Office
Office européen des brevets

(11) EP 4 702 844 A1

(12) EUROPEAN PATENT APPLICATION
published in accordance with Art. 153(4) EPC

(43) Date of publication:
04.03.2026 Bulletin 2026/10

(51) International Patent Classification (IPC):
A23C 9/152 (2006.01)          A23F 3/16 (2006.01)
A23L 2/00 (2006.01)           A23L 2/38 (2021.01)
A23L 2/52 (2006.01)           A23L 5/00 (2016.01)
A23L 29/00 (2016.01)

(21) Application number: 24796827.4

(22) Date of filing: 12.04.2024

(52) Cooperative Patent Classification (CPC):
A23C 9/152; A23F 3/16; A23L 2/00; A23L 2/38;
A23L 2/52; A23L 5/00; A23L 29/00

(86) International application number:
PCT/JP2024/014780

(87) International publication number:
WO 2024/225071 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.04.2023 JP 2023070731

(71) Applicant: Suntory Holdings Limited
Osaka-shi, Osaka 530-8203 (JP)

(72) Inventors:
• SUGINO, Ryosuke
  Kawasaki-shi, Kanagawa 211-0067 (JP)
• ISHII, Tomoki
  Kawasaki-shi, Kanagawa 211-0067 (JP)

(74) Representative: Vossius & Partner
Patentanwälte Rechtsanwälte mbB
Siebertstrasse 3
81675 München (DE)

(54) **MILK-CONTAINING BEVERAGE**

(57) Provided is a heat-sterilized milkcontaining beverage having reduced deterioration odor. The heat-sterilized milk-containing beverage contains epigallocatechin and inorganic salts including a magnesium salt, and the content of epigallocatechin in the beverage is 0.1-20.0 mg/100 ml and the content of magnesium in the beverage is 0.1-20.0 mg/100 ml.

EP 4 702 844 A1

**Description**

TECHNICAL FIELD

The present invention relates to a milk-containing beverage with reduced deterioration odor due to heat or light.

BACKGROUND ART

Milk-containing beverages having milk component(s) blended are highly palatable and are consumed throughout the year. A variety of container-packed milk-containing beverages capable of being stored at normal temperature for a long time are in circulation. However, milk components are sensitive to oxidation due to heat or light, and may generate deterioration odor (also referred to as "heating/oxidation odor" or "off-flavor") in response to heat or light during production or storage, which may decrease the quality of the beverages. Thus, methods of reducing the deterioration odor of milk-containing beverages by using various ingredients have been proposed. Examples of such a method include a method of producing milk-containing beverages with reduced off-flavor due to light oxidation or the like by incorporating antioxidant ingredient(s) such as catechin or green tea extract (Patent Literatures 1 and 2), and a method of producing milk or a milk product with reduced generation of heating odor by incorporating $\alpha$-glycosyl trehalose (Patent Literature 3).

CITATION LIST

PATENT LITERATURE

PTL1: JP 2011-512798 A
PTL2: EP 2 005 832 A1
PTL3: JP 2006-94856 A

SUMMARY OF INVENTION

TECHNICAL PROBLEM

In recent years, transparent containers, particularly molded containers made primarily of polyethylene terephthalate (so-called PET bottles), have been widely used as containers for container-packed beverages, and milk-containing beverages contained in transparent containers may be more exposed to light or oxygen. Thus, conventional methods of reducing deterioration odor do not necessarily achieve a sufficient preventive effect on the deterioration odor.
It is an object of the present invention to provide a milk-containing beverage (especially, a milk-containing beverage packed in a transparent container) with reduced deterioration odor.

SOLUTION TO PROBLEM

The present inventors have conducted diligent studies for achieving the object described above to find that incorporation of epigallocatechin and a magnesium salt can synergistically reduce the deterioration odor of a milk-containing beverage, and completed the present invention.
Specifically, the present invention relates to the following items:

[1] A heat-sterilized, milk-containing beverage containing a milk component and epigallocatechin, wherein:

(i) the epigallocatechin content is 0.1 to 20.0 mg/100 ml; and
(ii) the milk-containing beverage further contains inorganic salts including a magnesium salt, and has a magnesium content of 0.5 to 8.0 mg/100 ml.

[2] The beverage according to [1], wherein a proportion of a potassium content to the magnesium content [potassium content / magnesium content] in the beverage is 1.0 to 30.0.
[3] The beverage according to [1] or [2], wherein the inorganic salts further include a potassium salt.
[4] The beverage according to [1] or [2], wherein a protein content of the beverage is 0.1 to 2.0 g/100 ml.

ADVANTAGEOUS EFFECTS OF INVENTION

The present invention can provide a milk-containing beverage having an effectively reduced deterioration odor and having natural taste and aroma of milk, which is capable of being stored for a long time. In particular, the present invention can provide a milk-containing beverage having good milk flavor even when packed in a transparent container easily exposed to light (sunlight or UV rays).

DESCRIPTION OF EMBODIMENTS

(Milk Components)

The beverage of the present invention is a milk-containing beverage containing a milk component (hereinafter, also referred to as the "beverage of the present invention"). The term "milk component" refers to a component added to a beverage for the purpose of giving it milk flavor or milky feeling. The milk component used in the present invention is not particularly limited, and ordinary milks can be used. Examples thereof include animal milks such as bovine milk, ovine milk, and caprine milk, and plant milks such as soybean milk and almond milk, and they may be used alone or in combination of two or more. Among those milks, animal milks are classified to raw milk, bovine milk, certified bovine milk, raw caprine milk, sterilized caprine milk, raw ewe's milk, raw buffalo milk, composition modified milk, low-fat milk, fat-free milk, and processed milk depending on a processing method, according to the "Ministerial Ordinance on Milk and Milk Products Concerning Compositional Standards, etc. (December 27, 1951)," for example. Any milk can be used, regardless of the classification above. Further, for both the animal milk and the plant milk, the form of the milk is not particularly limited, and various forms of milk are applicable, including whole milk, fermented milk, whey, cream, butter, butter oil, concentrated whey, concentrated milk, concentrated skim milk, evaporated milk, evaporated skim milk, sweetened condensed milk, sweetened condensed skim milk, powdered whole milk, skimmed milk powder, cream powder, whey powder, butter milk powder, sweetened milk powder, formulated milk powder, soybean powder, and the like. Moreover, milk reconstituted from milk powder or concentrated milk can also be used.

The milk-containing beverage of the present invention contains protein(s) derived from the milk component. From the perspective of achieving a prominent effect, the protein content of the beverage of the present invention is preferably 0.1 g/100 ml or higher, more preferably 0.2 g/100 ml or higher, more preferably 0.3 g/100 ml or higher, and even more preferably 0.4 g/100 ml or higher. The upper limit of the protein content is preferably 2.0 g/100 ml or lower, more preferably 1.8 g/100 ml or lower, and even more preferably 1.6 g/100 ml or lower. The protein content of the beverage can be measured by an analytical method described later in the section of Examples.

(Epigallocatechin)

The beverage of the present invention contains an antioxidant ingredient, epigallocatechin. When the epigallocatechin is used alone, its effect to reduce the deterioration odor of the milk-containing beverage reaches a plateau. On the other hand, in the present invention, the effect is synergistically increased by blending a specific inorganic salt, as described below. The epigallocatechin content of the beverage of the present invention is 0.1 to 20.0 mg/100 ml, preferably 0.5 to 10.0 mg/100 ml, and more preferably 1.0 to 8.0 mg/100 ml.

The epigallocatechin may be incorporated in the beverage by adding epigallocatechin purified from green tea extract, or by adding the green tea extract to the beverage. Alternatively, the epigallocatechin may be incorporated in the beverage by adding a material which can be used as an elution source of the epigallocatechin, such as matcha, to the beverage.

(Inorganic Salts)

According to the present invention, the deterioration odor noticeably perceived in milk-containing beverages is reduced by using epigallocatechin, and can be synergistically reduced by additionally using the specific inorganic salt. Now, as used herein, the reduction of the deterioration odor includes one or both of prevention of generation of the deterioration odor, and masking of the deterioration odor generated. The milk-containing beverage with reduced deterioration odor means that the beverage has reduced deterioration odor as compared to a milk-containing beverage with no blended epigallocatechin or inorganic salt.

The term "inorganic salt," as used in the present invention, refers to a salt formed from inorganic acid and inorganic base. In the present invention, the inorganic salts contain at least one magnesium salt, and preferably further contain at least one potassium salt. The present inventors have confirmed that the advantageous effect of the present invention cannot be achieved by calcium salts, and a beverage with a high calcium content tends to undergo precipitation or aggregation during storage. Thus, it is important that the magnesium salt and the potassium salt described above should be added in the form of magnesium salt and potassium salt as food additives illustrated below, not in the form of a mixture of various inorganic salts including salts of various metal elements, such as various mineral sources containing various unpurified, naturally-occurring salts (e.g., mineral-containing (Mg-containing) yeast, Aqua Mineral, and whey minerals).

Specific examples of preferred magnesium salts in the present invention include, but are not limited to, magnesium chloride, magnesium sulfate, magnesium gluconate, magnesium acetate, magnesium citrate, magnesium malate, magnesium L-glutamate, and the like, which can be used as food additives. The at least one magnesium salt preferably includes magnesium chloride among these examples.

The magnesium salt described above is added so that the magnesium content of the beverage of the present invention is 0.5 mg/100 ml or higher. Since the effect of the present invention to reduce the deterioration odor is exhibited depending on the magnesium salt content, the magnesium salt is preferably added so that the magnesium content of the beverage is 0.6 mg/100 ml or higher, more preferably 0.7 mg/100 ml or higher, even more preferably 0.8 mg/100 ml or higher, particularly preferably 0.9 mg/100 ml or higher, and especially preferably 1.0 mg/100 ml or higher. When the magnesium content of the beverage exceeds 8.0 mg/100 ml, the effect of the present invention to reduce the deterioration odor reaches a plateau, and thus is undesirable due to increase in costs. Further, addition of an excessive amount of magnesium salt may affect the flavor of the beverage. The characteristic astringent taste of magnesium is drastically reduced by the presence of potassium at a certain amount, and the influence of magnesium on the beverage can be minimized by the presence of potassium at a certain amount. The magnesium salt is preferably added so that a ratio of the potassium content to the magnesium content in the beverage ([potassium content/ magnesium content]) is 1.0 to 30.0, more preferably in the range of 2.0 to 25.0, and even more preferably in the range of 3.0 to 20.0. The upper limit of the magnesium content of the beverage is 8.0 mg/100 ml or lower, preferably 6.0 mg/100 ml or lower, more preferably 5.0 mg/100 ml or lower, even more preferably 4.0 mg/100 ml or lower, and particularly preferably 3.0 mg/100 ml or lower, as described above. The magnesium content of the beverage can be measured by inductively coupled plasma optical emission spectroscopy (ICP-OES).

In the beverage, minerals derived from a raw material, such as a milk component, are generally present in addition to those added as the inorganic salts described above. In the present invention, the inorganic salts including the magnesium salt may be added so that the final magnesium content of the beverage (including both the magnesium derived from the raw material and the magnesium added as the magnesium salt) is within the range described above. Usually, the amount of the magnesium salt added is 0.0005 to 0.1% by mass, preferably 0.0008 to 0.08% by mass, and more preferably 0.001 to 0.05% by mass or 0.001 to 0.01% by mass, with respect to the entire beverage.

The milk-containing beverage of the present invention preferably contains a potassium salt as another inorganic salt, in addition to the magnesium salt described above. When the potassium salt is used in combination, it synergistically acts together with the magnesium salt, and thus the deterioration odor can be reduced more effectively than when the magnesium salt is used alone. Specific examples of preferred potassium salts in the present invention include, but are not limited to, potassium chloride, potassium phosphate, potassium gluconate, potassium citrate, potassium malate, and the like. Among these examples, potassium chloride is preferably contained.

In the beverage, potassium derived from a raw material, such as a milk component, is generally present in addition to the potassium salt added as the inorganic salts described above. When the potassium salt is added in the present invention, the potassium salt is preferably added so that the ratio of the final potassium content of the beverage (including both the potassium derived from the raw material and the potassium added as the potassium salt) to the magnesium content is 1.0 to 30.0 (i.e., [the potassium content/the magnesium content] is 1.0 to 30.0), as described above. Note that the potassium content of the beverage can be measured by atomic absorption spectrometry. When the potassium salt is added to the beverage, the amount of the potassium salt to be added is typically 0.0005 to 0.1% by mass, preferably 0.0008 to 0.08% by mass, more preferably 0.001 to 0.05% by mass, and even more preferably 0.002 to 0.03% by mass, with respect to the entire beverage.

Examples of preferred magnesium salts and potassium salts include magnesium chloride and potassium chloride. While milk-containing beverages tend to have characteristic sliminess or less-sharp flavor after heat sterilization, the addition of the chloride salts to the beverage improves the sharpness of the aftertaste of the beverage and reduces the sliminess and the less-sharp flavor so that the advantageous effect of the present invention can be perceived more.

As described above, the present invention can provide a beverage containing a milk component, but having a reduced deterioration odor, by adding inorganic salts including a magnesium salt (preferably, the inorganic salts further including a potassium salt) and epigallocatechin to the beverage. Although magnesium and potassium may be brought to the beverage also from a raw material (e.g., a milk component) other than the inorganic salts, as described above, the important feature of the present invention is the addition of the "inorganic salts" (such as a magnesium salt applicable as food additive) to the beverage.

When viewed from another aspect, the present invention can also be directed to a method of producing a milk-containing beverage with reduced deterioration odor, comprising addition of inorganic salts including a magnesium salt (preferably, inorganic salts further including a potassium salt) to the beverage. The inorganic salts may be added at any stage, as long as it is prior to the heat sterilization process. When the inorganic salts are added to the beverage, the inorganic salts are added so that the magnesium content (and also the potassium content, preferably) of the beverage is within the range described above. Thus, the present invention can provide a milk-containing beverage having reduced deterioration odor as compared to a beverage with no added inorganic salt.

(Other Ingredients)

In addition to the ingredients described above, other ingredients generally blended into a beverage (e.g., a sweetening ingredient, an antioxidant, a flavoring, a vitamin, an emulsifier, a thickening stabilizer, and the like) can be appropriately added to the beverage of the present invention, without departing from the intended object of the present invention.

(Heat Sterilization)

The milk-containing beverage of the present invention is a heat-sterilized beverage, the heat sterilization being conducted for long-period storage. Now, the term "heat sterilization," as used herein, refers to a method involving sterilization of a preparation liquid containing a milk component, epigallocatechin, and inorganic salts at a high temperature for a short period of time (UHT sterilization), followed by charging of the sterilized preparation liquid into a storage container after sterilization under aseptic conditions, and a retort sterilization method involving charging of the preparation liquid into the storage container, such as a can, followed by retort processing. Conditions of the heat sterilization may be suitably selected depending on properties of the preparation liquid of the milk-containing beverage and the storage container used. In the case of the UHT sterilization, the conditions typically include heat sterilization at 120 to 150°C for about 1 to 120 seconds, preferably at 130 to 145°C for about 30 to 120 seconds, and in the case of the retort sterilization method, the conditions typically include heat sterilization at 110 to 130°C for about 10 to 30 minutes, preferably at 120 to 125°C for about 10 to 20 minutes.

The heat-sterilized beverage of the present invention is a sealed, container-packed beverage capable of being stored for a long time. The container can be provided in a typical form such as a molded container made primarily of polyethylene terephthalate (so-called a PET bottle), a metal can, a paper container combined with metal foil or plastic film, and a bottle, as in the case of general container-packed beverages. The beverage of the present invention has resistance to light deterioration, as a result of incorporating a magnesium material in a given amount. Thus, transparent containers, particularly PET bottles, are preferred forms, since the advantageous effect of the present invention can be achieved remarkably. Herein, the term "transparent container" refers to a container which does not shade light and substantially allows visual observation of contents from the outside, including colored containers.

EXAMPLES

Hereinafter, the present invention will be described in specific detail with reference to Experimental Examples, but the present invention is not limited to the Experimental Examples. Further, unless otherwise indicated, the numerical ranges described herein include endpoint values thereof.

<Ingredient Analysis>

(1) Magnesium Content

The magnesium content was measured by inductively coupled plasma optical emission spectroscopy (ICP OES), in accordance with the magnesium analysis methods described in "Nutrition Labeling Standards (Consumer Affairs Agency's Announcement on Food Labeling No. 139 dated March 30, 2015), Appendix 'Analytical Methods for Measuring Nutrition Ingredients, etc.'"

(2) Potassium Content

The potassium content was measured by using extraction with hydrochloric acid as a pre-processing method and atomic absorption spectrometry as a measuring method, in accordance with the potassium analysis methods described in "Nutrition Labeling Standards (Consumer Affairs Agency's Announcement on Food Labeling No. 139 dated March 30, 2015), Appendix 'Analytical Methods for Measuring Nutrition Ingredients, etc.'"

(3) Protein Content

The protein content was analyzed by the Kjeldahl method described in "Nutrition Labeling Standards (Consumer Affairs Agency's Announcement on Food Labeling No. 139 dated March 30, 2015), Appendix 'Analytical Methods for Measuring Nutrition Ingredients, etc.,'" and determined by the following formula:

$$\text{Protein content (g/100 g)} = (V\text{-}B) \times F \times 0.0014 \times K \times 100 \quad / \, S$$

V is a titer of a main test (ml);
B is a titer of a blank test (ml);
F is a factor of 0.05 mol/L sulfuric acid standard solution;
K is a nitrogen-to-protein conversion factor;
S is a sampling amount (g) of a sample; and
0.0014 is a nitrogen amount (g) with respect to 1 ml of the 0.05 mol/L sulfuric acid standard solution.

The specific gravity of the beverage was measured, and the protein content per 100 g was converted to that per 100 ml.

(4) Epigallocatechin Content

A green tea beverage to be used as a sample was filtered using a filter (pore size: 0.45 $\mu$m), and was analyzed by HPLC. The analytical conditions of HPLC were as follows:
- HPLC device: TOSOH HPLC System LC8020 Model II;
- column: TSKgel ODS80T sQA (4.6 mm $\times$ 150 mm);
- column temperature: 40°C;
- mobile phase A: water:acetonitrile:trifluoroacetic acid (90:10:0.05)
- mobile phase B: water:acetonitrile:trifluoroacetic acid (20:80:0.05)
- detection: UV 275 nm
- injection amount: 20 $\mu$L;
- flow rate: 1 ml/min.;
- gradient program:

| Time (min.) | %A | %B |
| --- | --- | --- |
| 0 | 100 | 0 |
| 5 | 92 | 8 |
| 11 | 90 | 10 |
| 21 | 90 | 10 |
| 22 | 0 | 100 |
| 29 | 0 | 100 |
| 30 | 100 | 0; |

- standard reference material: epigallocatechin (high-purity reagent from Kurita).

Experimental Example 1: Action of Epigallocatechin to Reduce Deterioration Odor

Bovine milk, an emulsifier, and sodium bicarbonate in amounts indicated in Table 1 were mixed together. Epigallocatechin (EGC) was added to the resulting mixture at various concentrations. Water was added to each solution to give a total amount of 1000 g, followed by homogenization processing, to obtain each preparation liquid. Each preparation liquid was filled in a 190 g can, and then was subjected to heat sterilization at 125°C for 20 minutes to produce a heat-sterilized, milk-containing beverage (pH: 6.7), which was then cooled to 20°C. Note that "inorganic salts including a magnesium salt" are not blended into any one of the beverages in Experimental Example 1.

The resulting heat-sterilized, milk-containing beverages were subjected to various ingredient analyses and sensory evaluation of heating deterioration odor by 10 expert panels. Each panel evaluated whether each beverage had reduced heating deterioration odor as compared to that of the control (No. 1-1). Depending on the number of panels who answered YES, each beverage was evaluated by five-grade scoring as indicated below. The results are shown in Table 1. The heating deterioration odor was reduced by blending EGC.

- 5 points: all the panels (10 panels) feel that the heating deterioration odor is weaker than the control;
- 4 points: majority of the panels (7 to 9 panels) feel that the heating deterioration odor is weaker than the control;

- 3 points: about a half of the panels (5 or 6 panels) feel that the heating deterioration odor is weaker than the control;
- 2 points: less than half of the panels (2 to 4 panels) feel that the heating deterioration odor is weaker than the control;
- 1 point: 0 or 1 of the panels feels that the heating deterioration odor is weaker than the control.

[table 1]

|  | No.1-1 | No.1-2 | No.1-3 | No.1-4 | No.1-5 |
|---|---|---|---|---|---|
| Bovine milk (g/L) | 100.0 | 100.0 | 100.0 | 100.0 | 100.0 |
| Sodium bicarbonate (g/L) | 1.0 | 1.0 | 1.0 | 1.0 | 1.0 |
| Emulsifier (g/L) | 0.7 | 0.7 | 0.7 | 0.7 | 0.7 |
| **EGC (g/L)** | 0.00 | 0.001 | 0.01 | 0.06 | 0.10 |
| Protein content (g/100 ml) | 0.3 | 0.3 | 0.3 | 0.3 | 0.3 |
| Total Mg concentration (mg/100 ml) | 1.0 | 1.0 | 1.0 | 1.0 | 1.0 |
| Total K concentration (mg/100 ml) | 15.1 | 15.1 | 15.1 | 15.1 | 15.1 |
| **K/Mg** | 15.1 | 15.1 | 15.1 | 15.1 | 15.1 |
| EGC concentration (mg/100 ml) | 0.0 | 0.1 | 1.0 | 6.0 | 10.0 |
| Heating deterioration odor | (Control) | 2 | 3 | 3 | 3 |

Experimental Example 2: Action of EGC and Magnesium Salt to Reduce Deterioration Odor (1)

Heat-sterilized, milk-containing beverages (pH: 6.7) were produced as in Experimental Example 1, except that a magnesium salt was blended into them in amounts indicated in Table 2. The sample having EGC blended but not having the magnesium salt blended (No. 2-2) and the samples having the magnesium salt blended but not having EGC blended (Nos. 2-3 and 2-4) did not have sufficient effect to reduce the deterioration odor. On the other hand, in the samples containing EGC and the magnesium salt in combination (Nos. 2-5 to 2-8), the deterioration odor was successfully reduced so that the effect was perceivable for the majority or all of the panels. Thus, it reveals that EGC and the magnesium salt act synergistically. For the samples No. 2-7 and No. 2-8, some of the panels felt astringent taste of magnesium, although they had reduced deterioration odor. Thus, it suggests that the magnesium content of the beverage is preferably not higher than 8.0 mg/100 ml.

[Table 2]

|  | No.2-1 (No.1-1) | No. 2 -2 (No.1-4) | No. 2 -3 | No. 2 -4 | No. 2 -5 | No. 2 -6 | No. 2 -7 | No. 2 -8 |
|---|---|---|---|---|---|---|---|---|
| Bovine milk (g/L) | 100.0 | 100.0 | 100.0 | 100.0 | 100.0 | 100.0 | 100.0 | 100.0 |
| Sodium bicarbonate (g/L) | 1.0 | 1.0 | 1.0 | 1.0 | 1.0 | 1.0 | 1.0 | 1.0 |
| Emulsifier (g/L) | 0.7 | 0.7 | 0.7 | 0.7 | 0.7 | 0.7 | 0.7 | 0.7 |
| **EGC (g/L)** | 0.0 | 0.06 | 0.00 | 0.00 | 0.06 | 0.06 | 0.06 | 0.06 |
| Magnesium chloride hexahydrate (g/L) | 0 | 0 | 0.02 | 0.3 | 0.02 | 0.3 | 0.64 | 0.8 |
| Protein content (g/100 ml) | 0.3 | 0.3 | 0.3 | 0.3 | 0.3 | 0.3 | 0.3 | 0.3 |
| Mg from milk (mg/100 ml) | 1.0 | 1.0 | 1.0 | 1.0 | 1.0 | 1.0 | 1.0 | 1.0 |

(continued)

| | No.2-1 (No.1-1) | No. 2 -2 (No.1-4) | No. 2 -3 | No. 2 -4 | No. 2 -5 | No. 2 -6 | No. 2 -7 | No. 2 -8 |
|---|---|---|---|---|---|---|---|---|
| Mg from inorganic salts (mg/100 ml) | 0 | 0 | 0.2 | 3.6 | 0.2 | 3.6 | 7.7 | 9.6 |
| Total Mg concentration (mg/100 ml) | 1.0 | 1.0 | 1.2 | 4.6 | 1.2 | 4.6 | 8.7 | 10.6 |
| Total K concentration (mg/100 ml) | 15.1 | 15.1 | 15.1 | 15.1 | 15.1 | 15.1 | 15.1 | 15.1 |
| K/Mg | 15.1 | 15.1 | 12.6 | 3.3 | 12.6 | 3.3 | 1.7 | 1.4 |
| EGC concentration (mg/100 ml) | 0.0 | 6.0 | 0.0 | 0.0 | 6.0 | 6.0 | 6.0 | 6.0 |
| Heating deterioration odor | (Control) | 3 | 2 | 3 | 4 | 5 | 5 | 5 |

Expreimental Example 3: Action of EGC and Magnesium Salt to Reduce Deterioration Odor (2)

Heat-sterilized, milk-containing beverages (pH: 6.7) were produced as in Experimental Example 2, except for a change in the amount of the milk component, and were evaluated using No. 3-1 as a control. The results are shown in Table 3. Even the samples with lower amounts of the milk component could be confirmed to have a synergistic action to reduce the deterioration odor as a result of the combination use of EGC and the magnesium salt.

[Table 3]

| | No.3-1 | No.3-2 | No.3-3 | No.3-4 |
|---|---|---|---|---|
| Bovine milk (g/L) | 30.0 | 30.0 | 30.0 | 30.0 |
| Sodium bicarbonate (g/L) | 1.0 | 1.0 | 1.0 | 1.0 |
| Emulsifier (g/L) | 0.7 | 0.7 | 0.7 | 0.7 |
| EGC (g/L) | 0.00 | 0.06 | 0.00 | 0.06 |
| Magnesium chloride hexahydrate (g/L) | 0.00 | 0.00 | 0.30 | 0.03 |
| Protein content (g/100 ml) | 0.1 | 0.1 | 0.1 | 0.1 |
| Mg from milk (mg/100 ml) | 0.3 | 0.3 | 0.3 | 0.3 |
| Mg from inorganic salts (mg/100 ml) | 0 | 0.0 | 3.6 | 0.4 |
| Total Mg concentration (mg/100 ml) | 0.3 | 0.3 | 3.9 | 0.7 |
| Total K concentration (mg/100 ml) | 4.5 | 4.5 | 4.5 | 4.5 |
| K/Mg | 15.0 | 15.1 | 1.2 | 6.4 |
| EGC concentration (mg/100 ml) | 0.0 | 6.0 | 0.0 | 6.0 |
| Heating deterioration odor | (Control) | 3 | 3 | 5 |

Experimental Example 4: Action of EGC and Magnesium Salt to Reduce Deterioration Odor (3)

Heat-sterilized, milk-containing beverages (pH: 6.7) were produced as in Experimental Example 2, except for a change in the type of the magnesium salt, and were evaluated using No. 4-1 as a control. The results are shown in Table 4. Even the samples with different types of magnesium salt were confirmed to have a synergistic action to reduce the deterioration odor as a result of the combination use of EGC and magnesium salt.

[Table 4]

|  | No. 4 -1 (No.2-1) | No. 4 -2 (No.2-2) | No. 4 - 3 (No.2-6) | No.4-4 | No.4-5 |
|---|---|---|---|---|---|
| Bovine milk (g/L) | 100.0 | 100.0 | 100.0 | 100.0 | 100.0 |
| Sodium bicarbonate (g/L) | 1.0 | 1.0 | 1.0 | 1.0 | 1.0 |
| Emulsifier (g/L) | 0.7 | 0.7 | 0.7 | 0.7 | 0.7 |
| EGC (g/L) | 0.00 | 0.06 | 0.06 | 0.06 | 0.06 |
| Magnesium chloride hexahydrate (g/L) | 0.00 | 0.00 | 0.30 | 0.00 | 0.00 |
| Magnesium sulfate heptahydrate (g/L) | 0.00 | 0.00 | 0.00 | 0.37 | 0.00 |
| Magnesium L-glutamate (g/L) | 0.00 | 0.00 | 0.00 | 0.00 | 0.47 |
| Protein content (g/100 ml) | 0.3 | 0.3 | 0.3 | 0.3 | 0.3 |
| Mg from milk (mg/100 ml) | 1.0 | 1.0 | 1.0 | 1.0 | 1.0 |
| Mg from inorganic salts (mg/100 ml) | 0 | 0.0 | 3.6 | 3.6 | 3.6 |
| Total Mg concentration (mg/100 ml) | 1.0 | 1.0 | 4.6 | 4.6 | 4.6 |
| Total K concentration (mg/100 ml) | 15.1 | 15.1 | 15.1 | 15.1 | 15.1 |
| K/Mg | 15.1 | 15.1 | 3.3 | 3.3 | 3.3 |
| EGC concentration (mg/100 ml) | 0.0 | 6.0 | 6.0 | 6.0 | 6.0 |
| Heating deterioration odor | (Control) | 3 | 5 | 5 | 5 |

Experimental Example 5: Influences of Potassium Salt

Heat-sterilized, milk-containing beverages (pH: 6.7) were produced as in Experimental Example 2, by blending potassium chloride into the formulations indicated in Table5. Each of the resulting beverages was paired so that No. 5-1 was paired with each oj No. 5-2 to No. 5-6, and was presented to 5 panels for evaluating which one of each pair had a stronger deterioration odor by two-point discrimination. The results are shown in Table 6. The addition of the potassium salt allowed further reduction of the deterioration odor.

[Table 5]

|  | No.5-1 | No.5-2 | No.5-3 | No.5-4 | No.5-5 | No.5-6 |
|---|---|---|---|---|---|---|
| Bovine milk (g/L) | 100.0 | 100.0 | 100.0 | 100.0 | 100.0 | 100.0 |
| Sodium bicarbonate (g/L) | 1.0 | 1.0 | 1.0 | 1.0 | 1.0 | 1.0 |
| Emulsifier (g/L) | 0.7 | 0.7 | 0.7 | 0.7 | 0.7 | 0.7 |
| EGC (g/L) | 0.06 | 0.06 | 0.00 | 0.00 | 0.06 | 0.06 |
| Magnesium chloride hexahydrate (g/L) | 0.20 | 0.20 | 0.20 | 0.20 | 0.20 | 0.20 |
| Potassium chloride (g/L) | 0 | 0.03 | 0.067 | 0.12 | 0.77 | 1 |
| Protein content (g/100 ml) | 0.3 | 0.3 | 0.3 | 0.3 | 0.3 | 0.3 |
| Mg from milk (mg/100 ml) | 1.0 | 1.0 | 1.0 | 1.0 | 1.0 | 1.0 |
| Mg from inorganic salts (mg/100 ml) | 0 | 2.4 | 2.4 | 2.4 | 2.4 | 2.4 |
| Total Mg (mg/100 ml) | 1.0 | 3.4 | 3.4 | 3.4 | 3.4 | 3.4 |
| EGC concentration (mg/100 ml) | 6.0 | 6.0 | 0.0 | 0.0 | 6.0 | 6.0 |
| K from milk (mg/100 ml) | 15.1 | 15.1 | 15.1 | 15.1 | 15.1 | 15.1 |

(continued)

|  | No.5-1 | No.5-2 | No.5-3 | No.5-4 | No.5-5 | No.5-6 |
|---|---|---|---|---|---|---|
| K from inorganic salts (mg/100 ml) | 0.0 | 1.6 | 3.5 | 6.3 | 40.4 | 52.4 |
| Total K (mg/100 ml) | 15.1 | 16.7 | 18.6 | 21.4 | 55.5 | 67.5 |
| **K/Mg** | 15.1 | 4.9 | 5.5 | 6.3 | 16.3 | 19.9 |

[Table 6]

|  | Number of panels feeling stronger deterioration odor in No. 5-1 | Number of panels feeling stronger deterioration odor in samples other than No. 5-1 |
|---|---|---|
| **No.5-2** | 4 | 1 |
| **No.5-3** | 5 | 0 |
| **No.5-4** | 5 | 0 |
| **No.5-5** | 5 | 0 |
| **No.5-6** | 5 | 0 |

Experimental Example 6: Production of Beverages Packed in Transparent Container

Tea extract liquids were produced using green tea leaves or roasted green tea leaves. 100 g of tea leaves were stir-extracted under conditions with 3000 ml of hot water (90°C, 8 minutes), followed by solid-liquid separation using a centrifugal machine, thereby obtaining the extract liquids. Using the extract liquids or powdered matcha, milk-containing tea beverages were prepared in accordance with the formulations indicated in Table 7. The resulting milk-containing tea beverages were heat-sterilized, and 500 ml of each beverage was charged into a transparent PET (polyethylene terephthalate) bottle container to obtain a heat-sterilized container-packed beverage. Each of the milk-containing tea beverages was compared with the control containing no added inorganic salt, and was evaluated by 10 expert panels for which milk-containing tea beverage had stronger deterioration odor by using two-point discrimination. The results are shown in Table 8. The deterioration odor was reduced by the addition of the inorganic salts including magnesium.

[Table 7]

|  | No.6-1 | | No.6-2 | | No.6-3 | |
|---|---|---|---|---|---|---|
|  | **Control** | Invention sample | **Control** | Invention sample | **Control** | Invention sample |
| Green tea extract liquid (g/L) | 25.0 | 25.0 | - | - | - | - |
| Roasted green tea extract liquid (g/L) | - | - | 25.0 | 25.0 | - | - |
| Matcha (g/L) | - | - | - | - | 5.0 | 5.0 |
| Bovine milk (g/L) | 35.0 | 35.0 | 35.0 | 35.0 | 35.0 | 35.0 |
| Skimmed milk powder (g/L) | 10.0 | 10.0 | 10.0 | 10.0 | 10.0 | 10.0 |
| Cream (g/L) | 5.0 | 5.0 | 5.0 | 5.0 | 5.0 | 5.0 |
| Sugar (g/L) | 70.0 | 70.0 | 70.0 | 70.0 | 70.0 | 70.0 |
| Sodium bicarbonate (g/L) | 0.40 | 0.40 | 0.40 | 0.40 | 0.40 | 0.40 |
| Emulsifier (g/L) | 0.10 | 0.10 | 0.10 | 0.10 | 0.10 | 0.10 |
| Magnesium chloride hexahydrate (g/L) | 0.00 | 0.10 | 0.00 | 0.10 | 0.00 | 0.10 |
| Potassium chloride (g/L) | 0 | 0.26 | 0 | 0.26 | 0 | 0.26 |
| Protein content (g/100 ml) | 0.5 | 0.5 | 0.5 | 0.5 | 0.6 | 0.6 |

(continued)

| | No.6-1 | | No.6-2 | | No.6-3 | |
|---|---|---|---|---|---|---|
| | Control | Invention sample | Control | Invention sample | Control | Invention sample |
| Mg from milk + tea (mg/100 ml) | 1.8 | 1.8 | 1.5 | 1.5 | 2.4 | 2.4 |
| Mg from inorganic salts (mg/100 ml) | 0 | 1.2 | 0 | 1.2 | 0 | 1.2 |
| Total Mg concentration (mg/100 ml) | 1.8 | 3.0 | 1.5 | 2.7 | 2.4 | 3.6 |
| K from milk + tea (mg/100 ml) | 19.7 | 19.7 | 11.8 | 11.8 | 22.0 | 22.0 |
| K from inorganic salts (mg/100 ml) | 0 | 3.1 | 0 | 3.1 | 0 | 3.1 |
| Total K concentration (mg/100 ml) | 19.7 | 22.8 | 11.8 | 14.9 | 22.0 | 25.1 |
| **K/Mg** | 10.9 | 7.6 | 7.9 | 5.5 | 9.2 | 7.0 |
| EGC concentration (mg/100 ml) | 4.5 | 4.5 | 2.5 | 2.5 | 3.9 | 3.9 |

[Table 8]

| | Number of panels feeling stronger deterioration odor in control | Number of panels feeling stronger deterioration odor in invention sample |
|---|---|---|
| **No.6-1** | 8 | 2 |
| **No.6-2** | 7 | 3 |
| **No.6-3** | 8 | 2 |

Further, each milk-containing tea beverage charged into the container was stored at 15°C for 60 days under irradiation with visible light of 10000 Lux, and then was subjected to sensory evaluation in the same way as described above. The results are shown in Table 9. While the control beverage had remarkably changed flavor, the beverages containing the added inorganic salts including magnesium had less deterioration odor, and were evaluated by all of the panels to have weaker deterioration odor and preferable flavor of milk-containing beverage, as compared to the control.

[Table 9]

| | Number of panels feeling stronger deterioration odor in control | Number of panels feeling stronger deterioration odor in invention sample |
|---|---|---|
| **No.6-1** | 10 | 0 |
| **No.6-2** | 10 | 0 |
| **No.6-3** | 10 | 0 |

**Claims**

1. A heat-sterilized, milk-containing beverage comprising a milk component and epigallocatechin, wherein:

   (i) the epigallocatechin content is 0.1 to 20.0 mg/100 ml; and
   (ii) the milk-containing beverage further comprises inorganic salts including a magnesium salt, and has a magnesium content of 0.5 to 8.0 mg/100 ml.

2. The beverage according to claim 1, wherein a proportion of a potassium content to the magnesium content [potassium content / magnesium content] in the beverage is 1.0 to 30.0.

3. The beverage according to claim 1 or 2, wherein the inorganic salts further include a potassium salt.

4. The beverage according to claim 1 or 2, wherein a protein content of the beverage is 0.1 to 2.0 g/100 ml.

## INTERNATIONAL SEARCH REPORT

| International application No. |
|---|
| **PCT/JP2024/014780** |

**A. CLASSIFICATION OF SUBJECT MATTER**

*A23C 9/152*(2006.01)i; *A23F 3/16*(2006.01)i; *A23L 2/00*(2006.01)i; *A23L 2/38*(2021.01)i; *A23L 2/52*(2006.01)i; *A23L 5/00*(2016.01)i; *A23L 29/00*(2016.01)i

FI:   A23C9/152; A23L2/38 P; A23L2/00 A; A23L2/52; A23F3/16; A23L29/00; A23L5/00 G

According to International Patent Classification (IPC) or to both national classification and IPC

**B. FIELDS SEARCHED**

Minimum documentation searched (classification system followed by classification symbols)

A23C9/152; A23F3/16; A23L2/00; A23L2/38; A23L2/52; A23L5/00; A23L29/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-512798 A (THE COCA-COLA COMPANY) 28 April 2011 (2011-04-28)<br>claims | 1-4 |
| A | JP 2006-94856 A (HAYASHIBARA BIOCHEM. LAB., INC.) 13 April 2006 (2006-04-13)<br>paragraph [0013] | 1-4 |
| A | JP 2003-169641 A (KAO CORPORATION) 17 June 2003 (2003-06-17)<br>entire text | 1-4 |
| A | WO 2013/115257 A1 (MEIJI CO., LTD.) 08 August 2013 (2013-08-08)<br>entire text | 1-4 |
| A | JP 2007-119349 A (NATIONAL UNIV. CORP. SHIZUOKA UNIV.) 17 May 2007 (2007-05-17)<br>entire text | 1-4 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/014780**

| Patent document cited in search report | | | Publication date (day/month/year) | Patent family member(s) | | | Publication date (day/month/year) |
|---|---|---|---|---|---|---|---|
| JP | 2011-512798 | A | 28 April 2011 | US claims | 2009/0214712 | A1 | |
| | | | | EP | 2257181 | A1 | |
| | | | | CN | 101951781 | A | |
| | | | | KR | 10-2010-0126743 | A | |
| JP | 2006-94856 | A | 13 April 2006 | (Family: none) | | | |
| JP | 2003-169641 | A | 17 June 2003 | US whole document | 2003/0082273 | A1 | |
| | | | | EP | 1297757 | A1 | |
| | | | | KR | 10-2003-0027755 | A | |
| | | | | CN | 1408280 | A | |
| WO | 2013/115257 | A1 | 08 August 2013 | CN whole document | 104219969 | A | |
| JP | 2007-119349 | A | 17 May 2007 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011512798 A
- EP 2005832 A1

- JP 2006094856 A

**Non-patent literature cited in the description**

- Consumer Affairs Agency's Announcement on Food Labeling. *Nutrition Labeling Standards*, 30 March 2015 (139)